# EUROPEAN PATENT APPLICATION

(11) **EP 1 978 484 A1**
(43) Date of publication of application: **08.10.2008**
(21) Application number: 07006959.6
(22) Date of filing: 03.04.2007
(51) Int. Cl.: G06T 7/00

(54) **Cyclical image buffer**

(71) Applicant: MobilEye Technologies, Ltd., 1034 Nicosia (CY)
(72) Inventor: Mois Navon, POB 1276 Efrat 90435 (IL)
(74) Representative: Arth, Hans-Lothar

(57) **Abstract**

A storage buffer attached to an image processor for stereo image processing. The processor compares a first image and a second image. The storage buffer stores image data of the second image. The storage buffer includes: a data-shifting-hardware mechanism which while the processor compares a patch of the first image to a swath of the second image, the data shifting mechanism using hardware within the storage buffer shifts at least a portion of the swath within the storage buffer. The data-shifting hardware mechanism includes preferably digital multiplexers with respective selectable inputs from adjacent and non-adjacent columns of data within the storage buffer and selectable inputs from adjacent rows of data within the storage buffer.

## Description

### FIELD AND BACKGROUND OF THE INVENTION

The present invention relates to data storage and in particular an efficient data buffer for use in a stereo image processing system which maximizes processing speed by reducing the number of accesses to the data buffer..

Image processing is conventionally performed by reading an image or a portion thereof into a memory device, *e.g*. RAM. The image data is accessed from the memory device by the image processor or circuitry for the image processing. Typically, image processing applications access the same picture elements, or pixels, multiple times, and the speed of the image processing is limited by the large number of required accesses to the memory device, independent of the speed or efficiency of the actual processing. Thus, the processing circuitry generally waits while data required for the processing is being retrieved from the memory. One approach used to address this problem is a double buffer, sometimes referred to as a "ping-pong" buffer. A "ping-pong" buffer is disclosed in US patent 5,224,213 by Dieffenderfer et al. The ping-pong data buffer mechanism which transfers data from one data bus to another data bus includes a dual-port storage mechanism having a single storage array and two independent ports with each port having its own separate data, address and control lines. Write circuitry is coupled to one of the independent ports for receiving data from one of the data buses and storing it into a first portion of the storage array. Read circuitry is coupled to the other of the independent ports for simultaneously reading data from a second portion of the storage array and supplying it to the other data bus. Mode control logic is provided for enabling the storing and reading functions of the first and second portions of the storage array to be interchanged back and forth from time to time so that data may be read from one portion while data is being stored into the other portion and vice versa. The ping-pong buffer scheme provides one buffer for processing the current tasks while a second identical buffer is used to retrieve the next batch of data for processing. When both data retrieval and processing have completed their current tasks, the buffers are swapped such that newly retrieved data is used for processing and the old processing data is now overwritten with the next batch of data from memory. Although the ping-pong buffer scheme increases throughput and improves processing time, the ping-pong buffer scheme doubles the in-circuit storage and associated circuitry, since two full image portions are stored variations of the ping-pong buffer scheme for image processing applications have been disclosed in US Patent 7,038,689 by Willis.

Thus there is a need for a very efficient data buffer scheme which both minimizes the required amount of hardware, while at the same time provides a means for maximum processing throughput. Such a scheme can be achieved by noting a unique characteristic of the data processed in stereo imaging.

The term "stereo imaging" as used herein refers to the processing of images being input from two cameras focused on the same scene or object. Processing of "stereo imaging" is primarily though not exclusively concerned, with matching a patch of data from one camera (e.g. right-hand camera) with a corresponding image patch from the companion camera (e.g. left-hand camera). The patch and the corresponding patch both include images of the same object from slightly differing perspectives. The matching of the images allows calculation of disparity between the image patches which may be used to accurately calculate distance to the object based on known quantities such as the focal length of the camera lens and the distance between the cameras. The terms "moving" and "shifting" data are used herein interchangeably.

### SUMMARY OF THE INVENTION

According to the present invention there is provided a method, in a system including an image processor attached to a storage buffer, for comparison between first image data and second image data. A patch of the first image data is compared to a swath of the second image data. The storage buffer stores the swath of the second image data. During the comparison, the swath is shifted using a hardware mechanism within the storage buffer. The storage buffer typically includes columns of data, numbered from zero to N. The shifting includes, upon each clock cycle of the processor: (i) moving data from column one into column N; and (ii) for n columns one to N, moving data from column n to column n-1. The patch is typically compared to corresponding sized patches within the swath M times, wherein M is less than N, and upon completing the comparison to the swath, at least N-M+1 columns of data are moved (or shifted) in a single step using the hardware mechanism. A multi-shift of groups of data columns is performed within the storage buffer to allow for new alignment of the next needed swath. Upon completing the comparison to the swath, a portion, e.g. one or two columns of the second image data is shifted into the storage buffer from a preferably small second storage buffer using a similar hardware mechanism thus readying the second swath in the storage buffer. The second storage buffer preferably includes at least one column of image data, the height of the columns being equal to the height of the swath.

According to the present invention there is provided, a storage buffer attached to a processor. The processor compares a first image and a second image. The storage buffer stores image data of the second image. The storage buffer includes: a data-shifting-hardware mechanism which, while the processor compares a patch of the first image to a swath of the second image. The data shifting mechanism using hardware within the storage buffer shift at least a portion of the swath within the storage buffer. The data-shifting hardware mechanism includes preferably digital multiplexers with respective selectable inputs from typically adjacent columns of data within the storage buffer and selectable inputs from adjacent rows of data within the storage buffer. The digital multiplexers preferably include selectable inputs from at least one non-adjacent consecutive columns of data within the storage buffer.

According to the present invention there is provided a system for processing stereo images including a first image from a first camera and a second image from a second camera. A storage buffer is attached to a processor. The processor compares a first image and a second image. The storage buffer stores image data of the second image. The storage buffer includes a data-shifting-hardware mechanism which while the processor compares a patch of the first image to a swath of the second image, the data shifting mechanism using hardware within the storage buffer shifts at least a portion of the swath within the storage buffer. A second preferably small storage buffer is operatively attached to the storage buffer providing an extension to it which allows for data for the next swath to be stored. Upon completing the comparison between the patch of the first image and the swath of the second image, new data comprising a second swath is shifted into the storage buffer using a similar data-shifting-hardware mechanism attached between the storage buffer and the second storage buffer. The second storage buffer preferably includes no more than two columns of data. A pixel alignment unit is preferably attached to the storage buffer which inputs two consecutive words from a memory unit and aligns the two consecutive words to a single word. The pixel alignment unit is typically attached to the second storage buffer.

### BRIEF DESCRIPTION OF THE DRAWINGS

The invention is herein described, by way of example only, with reference to the accompanying drawings, wherein:
FIG. 1 a is a prior art drawing of a conventional stereo camera configuration;
FIG 1b is a schematic drawing of two images illustrating a patch and a swath, respectively, in two images and a comparison thereof in stereo processing of the images, according to an embodiment of the present invention;
FIG 1c is a drawing showing the overlap of adjacent swaths of data, according to an embodiment of the present invention
FIG. 2 is a drawing according to an embodiment of the present invention of buffering for stereo image processing hardware;
FIG 3 is a simplified schematic diagram of a storage buffer with feedback between columns of data, and feed forward between rows, according to an embodiment of the present invention;
FIG. 4 is a flow diagram of a regular mode of operation of the system of Figure 2, according to an embodiment of the present invention;
FIG 5A is an illustration in perspective of a swath of data (22x7), and respective column labels, according to the embodiments of the present invention;
FIG. 5B is an illustration of the shifting of data with each clock cycle, according to the regular mode of operation; and
FIG 5C is an illustration of the shifting of data with each clock cycle, according to an enhanced mode of operation.

### DESCRIPTION OF THE PREFERRED EMBODIMENTS

The present invention is of a system and method for efficiently storing and shifting stored data to be effected by shifting data stored within a data buffer for maximizing efficiency of stereo image processing while minimizing requisite hardware.

The principles and operation of a system and method of storing and shifting data stored in the data buffer, according to the present invention, may be better understood with reference to the drawings and the accompanying description.

Before explaining embodiments of the invention in detail, it is to be understood that the invention is not limited in its application to the details of design and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

By way of introduction, the principal intention of the present invention is to maximize processing throughput by reducing the number of times access is required to the image memory to retrieve the data. The number of times access is required is reduced by shifting the image data in the buffer using a hardware mechanism attached to the data buffer so that multiple accesses to memory for the same image data are avoided.

It should be noted that while the discussion herein is directed to stereo image processing and generating a disparity map for distance calculations, the principles of the present invention may be adapted for use in, and provide benefit for, other applications of stereo image processing.

Furthermore, the hardware mechanism which shifts the data in the buffer may be of any such mechanisms known in the art. It should be further noted that the principles of the present invention are equally applicable across the full range of simultaneous image processing of multiple images. While the discussion herein is directed toward application of the present invention to stereo image processing, the principles of the present invention may be readily adapted for use with other types of processing as well.

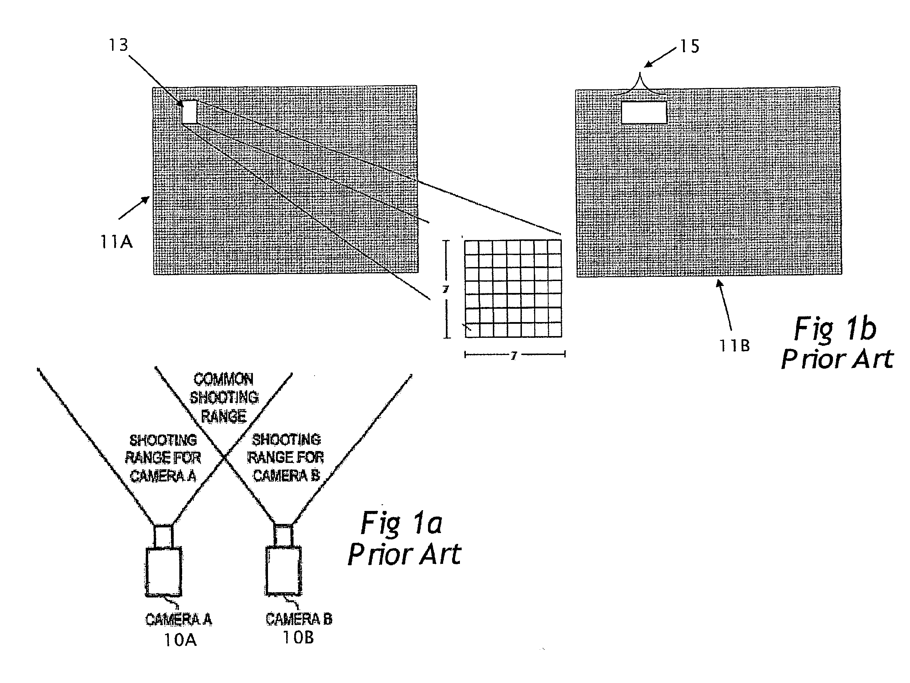

Referring now to the drawings, Figure 1a illustrates two cameras **10A** and **10B,** respectively, imaging the same scene in a stereo imaging configuration. Figure 1b shows, schematically, image **11A** as stored in or downloaded from camera **10A** and image **11B** as stored in or downloaded from camera **10B.** A first step in stereo image processing of images **11** is to compare or correlate images **11** to find image portions of the same objects in the scene. In order to proceed with the comparison between images **11,** since lone pixels will not yield significant image correlation, a "patch" **13** of data consisting of, for example, 7x7 picture elements, or pixels, is used to put the center pixel of patch **13** into proper context. For the purposes of the present example, for a low-resolution image of 160×120, the greatest disparity expected in position of one object as seen by right camera **10B** relative to left camera **10A** is within 16 pixels. Thus, taking a patch **13** of 7x7 pixels in image **11A** and performing a "find" operation on 16 adjacent patches in companion image **11B** would require a data swath **15** to have 22x7 pixels. Since each patch **13** has a center pixel surrounded by a pixel frame of three pixels, 22 pixels are needed to contain the 16 pixels under consideration along with 3 pixels on the right and 3 pixels on the left.

Patch **13** of 7x7 and swath 22 x7 and other parameters used are by way of example only and in other embodiments of the present invention, other patch size, swath size and other parameters may be used.

The present embodiment of the invention includes taking a patch **13** in image **11A** (referred to herein as the "fixed image") and performing a "find" operation in a swath **15** including 16 patches of 7x7 pixels centered around 16 adjacent pixels in image **11b** (referred to herein as the "moving image" because the image processing step "moves" through image **11b)**. Patch **13** is compared with similar patches of 7x7 pixels in swath **15** by performing, for instance, a SAD (Sum Absolute Difference) operation, whereby each pixel in patch 13 is subtracted from the corresponding pixel in a patch within swath **15** of image **11b.** The absolute value of the difference is then taken and the result of all the absolute differences for all pixels in the patch (*e.g*. 49 for 7x7 patches) is then summed, thus providing a "score" of the comparison. The closer the patches match, the closer the score will be to zero. Other operations would work as well, like sum of squared differences (*e.g*. SSD). The "find" operation for any given pixel in the fixed image will result in 16 scores corresponding to the 16 patches in swath **15** on which the comparison was performed. The best score is the minimum of the 16 scores, though algorithms other than "minimum" could be applied to determine a "best score". The patch comparison yielding the best score is considered a "match" and the disparity value (in number of pixels) associated with that particular match is then stored in memory. For example, if the third patch within the 16 patches has the best score then the disparity is 2 pixels (i.e., the first pixel patch corresponds to a disparity of 0 pixels). The patch matching, or "find", procedure is performed for every pixel in fixed image **11A**, resulting in a disparity map containing a disparity value per pixel. The disparity map can then be processed by software to determine, for instance, the distance of objects from the cameras.

Assuming camera memory storage of 8-pixels/cell (i.e., for 8-bit pixels, each memory cell is 64-bits wide), in order to set up a 7x7 patch, a prior art circuit would perform a minimum of 7 separate memory reads (one per row) just to prepare one patch of data. Obviously 7 reads for one pixel patch is inefficient, since this would result in a processing rate of 1 pixel patch every 7 cycles. Furthermore, for patches not aligned to a memory cell, 2 reads per patch could be required, thus bringing the figure to 14 cycles/pixel. (Non-alignment results when one 7 pixel row needed does not reside in one 64-bit cell but rather spans across two adjacent memory cells of image memory).

Once a pixel-patch **13** has had its 16 SAD values calculated, the next 22x7 swath **15** is needed to run the "find" for the next adjacent fixed pixel-patch **13.** For the fixed image buffer we need merely shift one pixel over to obtain the next adjacent patch **13;** however the moving image buffer of the prior art needs to be "reloaded" with all the same data shifted by one. To support this need without having to re-read the data from memory, the buffers are configured with a hardware mechanism or "feedback" between the columns of data to save shifted out data as well as a mechanism to perform multi-shifts of groups of column data in to their appropriate positions for the next cycle - thus "recycling" the data from the previous swath - and hence the title of the present application "Cyclical Image Buffer."

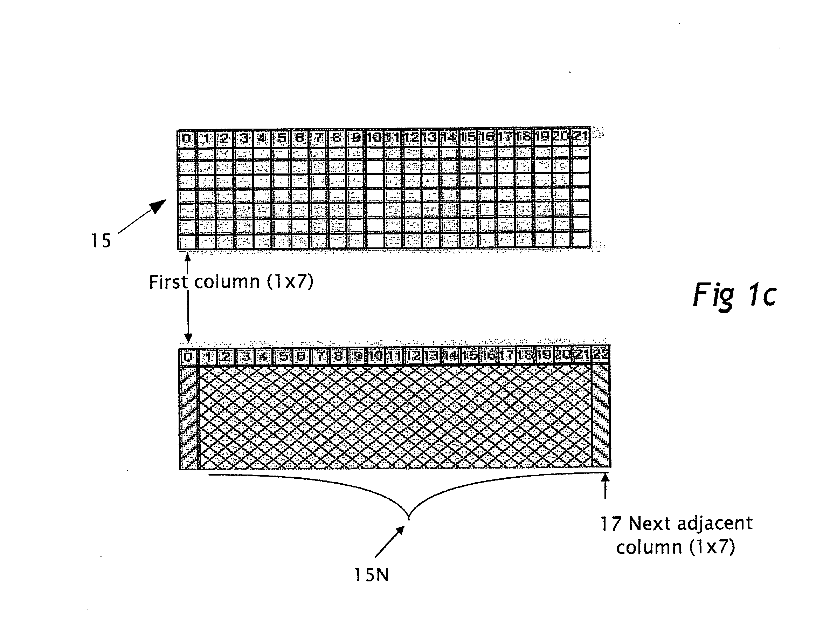

Reference is now made to Figure 1c. Following the initial "find" operation on the first pixel patch and swath, the circuit advances to the next adjacent pixel patch in fixed image **11a** for which a search is performed in 16 patches of the next swath **15N.** What is noteworthy about "stereo" image processing is that all that is needed in data swath **15N** is the same 22x7 pixels of the prior data swath **15** excluding the first column (1x7) which is no longer of interest and the last column (1x7) which is now to contain next adjacent column **17** of pixel data.

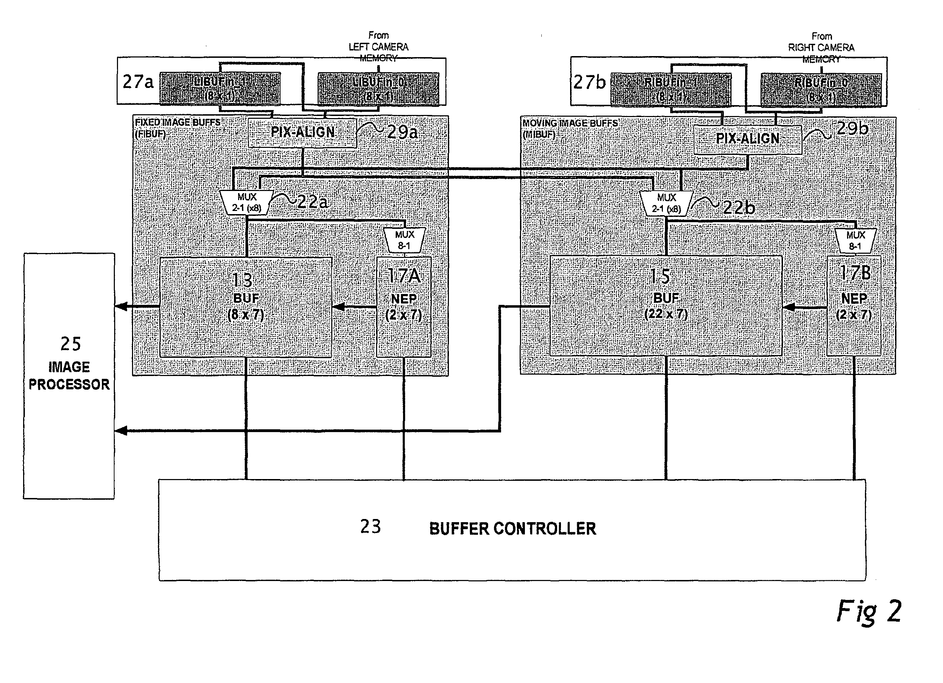

Reference is now made to Figure 2 which shows a simplified block diagram of an image processing circuit, according to an embodiment of the present invention. A data buffer stores patch **13** (or fixed data buffer **13)** and another data buffer (or moving data buffer **15**) stores swath **15.** Data buffers **13** and **15** are attached to both a buffer controller **23** and to an image processor **25.** The term "image processor" as used herein refers to the patch comparison processing hardware (*e.g*. the circuitry that performs the SAD operation). This hardware is then part of algorithm block which is implemented in hardware (*e.g*. ASIC) to be connected to a general purpose microprocessor or other hardware *e.g*. SoC (System on a Chip). Image data is fed into data buffers **13** and **15** via multiplexers **22a** and **22b** respectively, which are fed from pixel alignment unit **29a** and **29b,** that perform row alignment of images **11a** and **11b** if and when required. Pixel alignment unit **29a** and **29b** receive their data from input mechanism **27a** and **27b** respectively, which preferably includes two data latches fed from the memories of cameras **10A** and **10B,** respectively. The data from each camera memory is preferably double latched to allow for non-64 bit-aligned images stored in camera memory. Thus, two adjacent reads of the 64 bit memory cells of camera memory will then need to be aligned to one 64 bit data word to be latched into data buffers **13** and **15.** The pixel alignment units **29a** and **29b** also preferably have a pass through mode when images **11a** and **11b** do not require alignment.

Multiplexers **22a** and **22b** select between the cameras **10A** and **10B** to allow for patch **13** (of fixed image **11A)** and swath **15** (of moving image **11B)** to have inputs from either camera **10A** or **10B.** Thus, image **11A** from camera **10A** may serve as the fixed image source, searching for matches in image **11B** of camera **10B;** or camera **10B** can serve as the fixed image source while image **11A** of camera **10A** is used to search for matches.

The next adjacent column **17** of the next adjacent pixel data swath **15N** is stored in a next end pixel (NEP) buffer **17B.** Similarly for fixed buffer **13** storing a 7x7 patch, a 1×7 column buffer for the next patch is stored in a next end pixel (NEP) buffer **17A.** In an enhanced mode of operation, fixed buffer 13 stores eight columns of 7 pixels, moving buffer **15** stores 23 columns of 7 pixels (using NEP **17B** to initially hold the one extra pixel column); NEP **17A** and **17B** each store two columns of 7 pixels to have the next adjacent data ready for the following "find" operation.

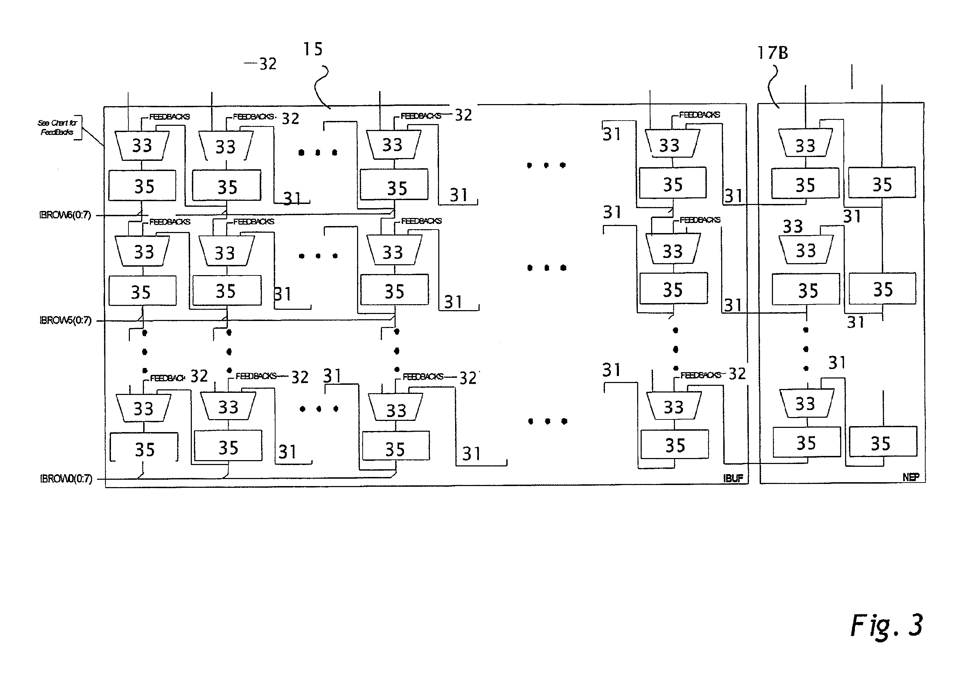

Reference is now made to Figure 3, which shows in more detail the construction of moving data buffer **15** and NEP buffer **17B.** Each register element of data buffer **15** and associated NEP buffer **17B** is fed by outputs of digital multiplexers **33.** One of the inputs of multiplexers **33** is from a previous row of buffers **15,** such that each element **35** is optionally input by element **35** above in the same column and previous row. Buffers **15** and **17B** are as such, built in a "shift down" architecture thus reducing the fan-out of the driving logic. Another "shift forward" input **31** of digital multiplexers **33** is attached to element 35 from the next column in buffers **15** and **17B** and in the same row. The last column of moving buffer **15** and the first (or only) column of NEP buffer **17B** are similarly attached with inputs **31.** When NEP buffer **17B** includes two columns, as shown in Figure 3, the two columns are similarly connected. Finally, multiplexers **33** include inputs (labeled "FEEDBACKS **32")** which serve to implement the several hardwired shifts (multi-shifts) that are required on the 16^{th} cycle to move all the saved pixels to the appropriate positions in the buffer before beginning of the find process of the next swath.

### Regular Mode Operation

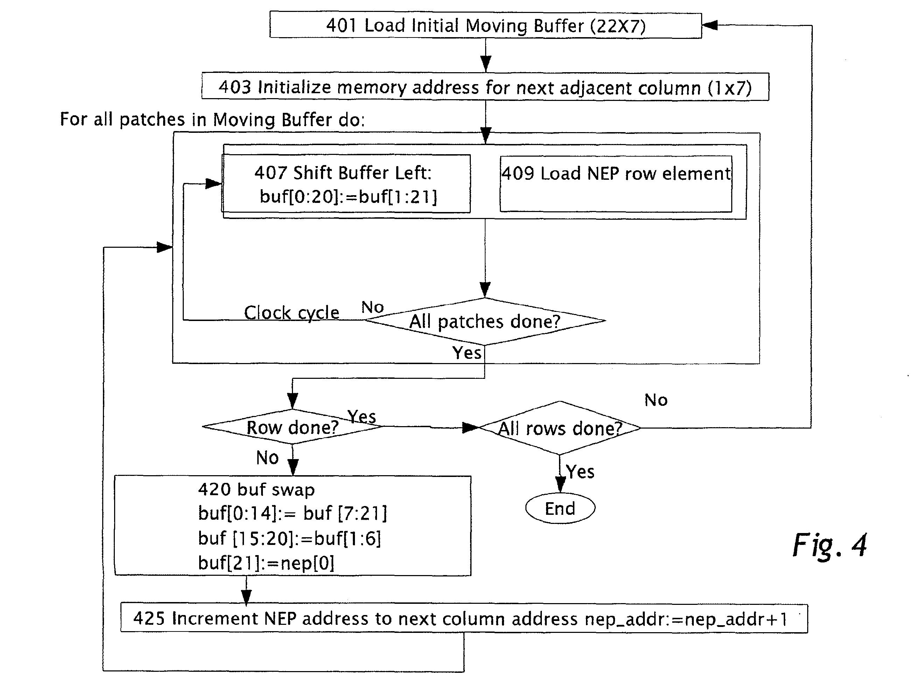

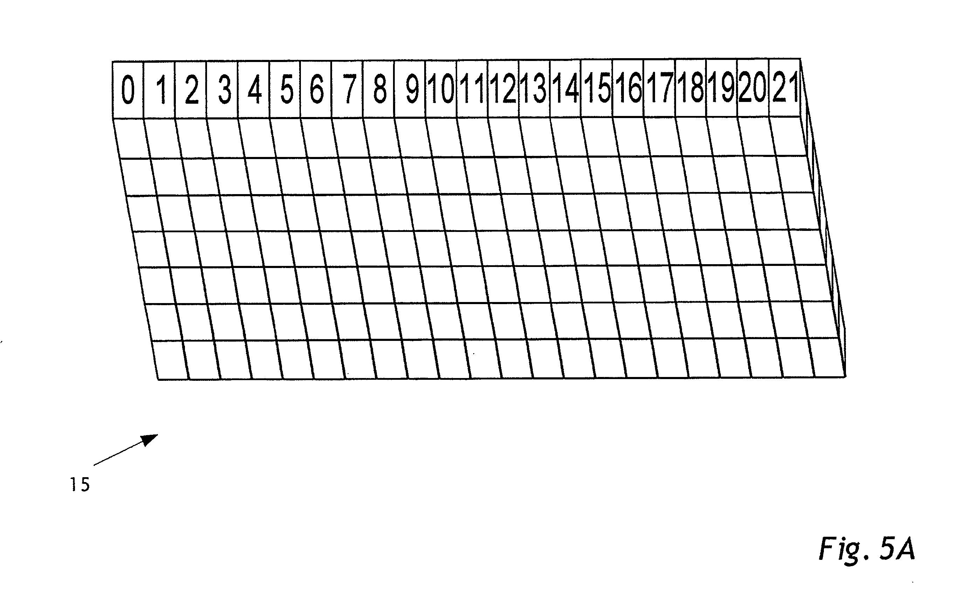

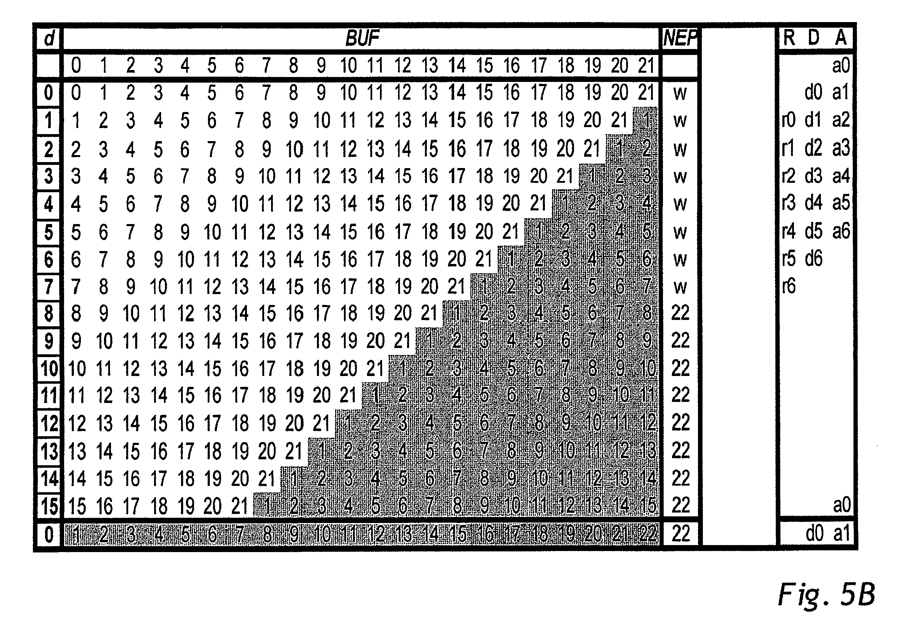

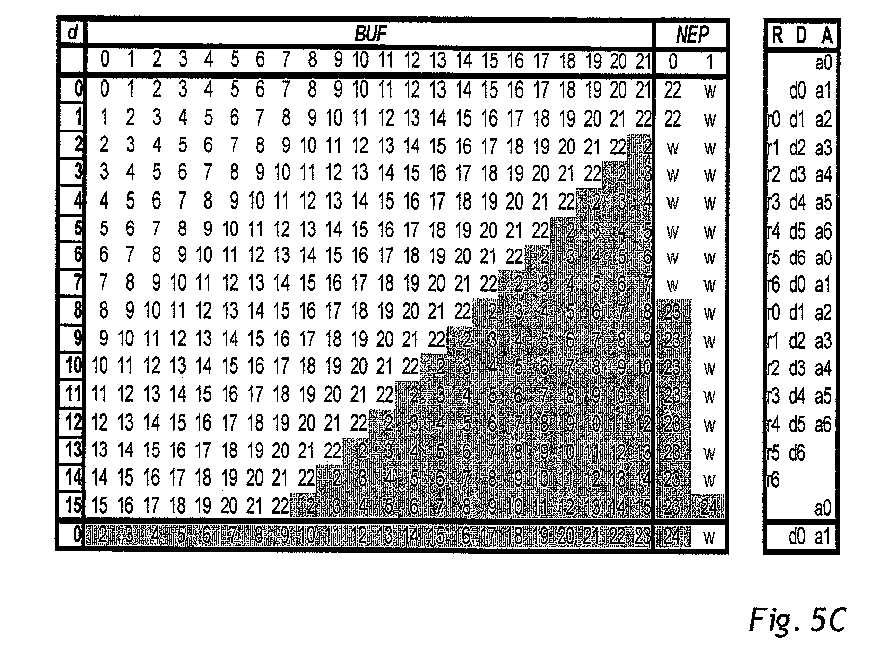

According to a mode of operation (referred to herein as a "regular mode") of the present invention, a new 7x7 patch stored in fixed buffer **13** from fixed image **11A** is supplied every 16 clock cycles, while moving image **11B** supplies a new 7x7 patch from swath **15** every clock cycle. Reference is now made to Figure 4 which illustrates a flow diagram of the regular mode of operation for the moving buffer. An initial 7x7 patch from image **11A** is loaded into fixed buffer **13.** An initial data swath from image **11B** is loaded (step **401)** into moving buffer **15.** Moving buffer **15** now stores the current 22 pixel columns to calculate the 16 SAD values for current patch **13.** Reference is now also made to Figure 5 which illustrates the content and shifting of data within moving buffer **15,** according to embodiments of the present invention. Figure 5A illustrates 22 1×7 columns of data as stored in moving buffer **15**. Columns are labeled with numbers 0 through 21. Each column label (0-21) refers to a column of data, in this case, with seven row elements in each column. Figure 5B illustrates a memory map of moving buffer **15** for each clock cycle of the regular mode of operation. Column "d" indicates system clock cycles. Sixteen clock cycle rows are labeled with clock cycles 0-15. The number labels from 0 to 21 under BUF each represent the column of 7 row elements of data as shown in perspective in Figure 5A. For each clock cycle, the pixels are shifted left (step **407)** 1 pixel every clock, with the second column (i.e., buf[1]) of moving buffer **15** being "fed-back" to the final column. (i.e., buf[21]) of moving buffer **15.**

In the mean time, after moving buffer **15** is initialized (step **401),** the memory address for the next adjacent column of data (needed for the upcoming swath) is initialized (step **403).** NEP buffer **17B** of 1×7 data elements is updated (step **409),** one row element per clock cycle so that NEP buffer **17B** becomes valid on the eighth clock cycle. Figure 5B, as shown in the columns labeled "R,D,A", illustrates how NEP buffer **17B** doesn't become valid till 8 clock cycles after the start. The "A" column represents the "Address" being sent to the memory, the "D" column shows the "Data" being read, and the "R" column displays the data "Registered" before it is then latched into NEP buffer **17B.** NEP buffer **17B** is shown with "w" indicating that it is "waiting" for the full 1x7 data, the "22" then indicating that the full column for pixel column 22 has been latched into NEP buffer **17B.**

Patch count of moving buffer **15** is incremented until the last of the 16 patches has been shifted left (step **407)** and processed (*e.g*. SAD processing not shown in Figure 4). When all the 16 patches of the swath are processed, then in one clock cycle (step **420)** the following occurs simultaneously:
- buffer columns 7-21, are shifted in one step (i.e., there is a hardwired shift left of seven) to columns 1-14;
- buffer columns 16-21, currently in buffer slots 1-6, are fed-back (i.e., there is a hardwired shift right of fourteen) to slots 15-20; and
- the "new end pixel" column in NEP buffer **17B** is shifted left one into buffer **15** column 21.

These hardwired shifts are indicated in Figure 3 by multiplexers **33** inputs labeled "FEEDBACKS 32".

In the mean time, after moving buffer **15** has now been readied (step **420**), the memory address for the next adjacent column of data (needed for the upcoming swath) is incremented (step **425**). When the end of a row is reached in images **11**, the operation continues at the beginning of the next row (returning to step **401**). When all the rows are processed the image processing is complete and the complete disparity map is output.

### Enhanced Mode Operation

By employing a modification to the hardware, the throughput of the regular mode of operation may be doubled. Specifically, another column buffer may be added to NEP buffers **17A** and **17B** with a "shift forward" **31** link between the two columns of NEP buffer **17A** and **17B**. Then two pixel patch "finds" are performed on two adjacent 16-pixel'swaths **15**, thus effectively doubling the throughput of the regular mode of operation. Reference is now made to Figure 5C, which maps the moving buffer during the clock cycles of the enhanced mode of operation. Since the system is performing "finds" on two fixed pixel-patches, moving buffer **15** needs to store 23 pixel columns: 0-21 for the first pixel-patch find and 1-22 for the second pixel-patch find. The first column of the NEP (i.e. NEP0) is preferably used to extend moving buffer 15 and temporarily hold the extra pixel column.

Like the regular mode, the pixels are shifted left (as in step **407)** by 1 pixel every clock. However, unlike the regular mode, where pixel columns 1-21 are fed back to the end of moving buffer **15** to be saved for the next swath find, in enhanced mode, the next two swaths needed will be of pixel columns 2-23, and 3-24. Due to these constraints, the first clock cycle that performs a shift left by 1, will include shifting in the last pixel column of the current double swath, presently in NEP0.

Following this, NEP0 and NEP1 are then filled with the two next end pixel columns of the upcoming swaths. This will take 16 cycles, 7 cycles for each of the 7 rows per NEP column, plus 1 cycle for the registering of the memory output and 1 cycle for registering of the data into the NEP buffer, thus using the full available 16 cycles till the data must be ready for the next pixel patch finds (as can be seen in the RDA columns of the chart in 1.2.2). It should be noted that the double registering for pixel alignment mentioned previously and shown in Figure **2** registers **27b** are only necessary for swath initialization, the NEP column always being within a given 64b memory cell and thus only one register element is used with pixel alignment unit **29b** set to pass-through.

Upon every clock cycle of cycles 1-14, the pixels are shifted left by one pixel, while at the same time readying the moving buffer **15** for the next swaths by feeding the pixels in column number 1 back to column number 21 (just as was done in the regular mode, only here the feedback starts on cycle 1 as opposed to starting on cycle 0 - compare Figures 5B and 5C). This continues until the last of the 16 patches has been processed at which time pixel columns 8-21 which currently contain pixel columns 2-15, respectively, are shifted forward by 8 in one action (i.e., moving buffer **15** contains a hardwired shift-left of 8). At the same time, upon the 16th clock, pixel columns 1-7, which currently contain pixel columns 16-22, respectively, are fed-back to pixel columns slots 14-20 (again, moving buffer **15** is hardwired for this operation). And simultaneously, the "new end pixel columns" in the NEP buffer are shifted left into pixel column slots 21 and NEP0. All this is done for all 7 rows in one clock cycle. Once the new pixels have begun their 16 clock calculations, the NEP is again filled with the next end pixel columns.

While the invention has been described with respect to a limited number of embodiments, it will be appreciated that many variations, modifications and other applications of the invention may be made.

## Claims

1. In a system including an image processor attached to a storage buffer, a method for comparison between first image data and second image data, the method comprising the steps of:
(a) comparing a patch of the first image data to a swath of the second image data, the storage buffer storing the swath of the second image data; and
(b) during said comparing, shifting of said swath using a hardware mechanism within the storage buffer.

2. The method according to claim 1, wherein the storage buffer includes a plurality of columns of data, said columns numbered from zero to N, wherein for said patch said comparing to said swath is performed M times, wherein M is less than N, further comprising the step of:
(c) upon completing said comparing to said swath, moving at least N-M+1 columns of data in a single step.

3. The method according to claim 1, further comprising the step of:
(c) upon completing said comparing to said swath, second shifting into the storage buffer a portion of the second image data, wherein said second shifting is performed from a second storage buffer using a second hardware mechanism into the storage buffer thereby completing a second swath in the storage buffer.

4. The method according to claim 3, wherein said second storage buffer includes no more than two columns of second image data, the height of said columns being equal to the height of said swath.

5. The method according to claim 1, wherein the storage buffer includes a plurality of n columns of data, said columns numbered from zero to N, wherein said shifting includes upon each clock cycle of the processor:
(i) moving the data stored in column one into column N; and
(ii) moving the data stored in each of the n columns from column n into column n-1.

6. A storage buffer attached to a processor, wherein the processor compares a first image and a second image, the storage buffer storing image data of the second image, the storage buffer comprising:
(a) a data-shifting-hardware mechanism which while the processor compares a patch of the first image to a swath of the second image, the data shifting mechanism using hardware within the storage buffer shifts at least a portion of the swath within the storage buffer.

7. The storage buffer of claim 6, wherein the data-shifting hardware mechanism includes a plurality of digital multiplexers with respective selectable inputs from adjacent columns of data within the storage buffer.

8. The storage buffer of claim 7, wherein said digital multiplexers include a second plurality of respective selectable inputs from adjacent rows of data within the storage buffer.

9. The storage buffer of claim 7, wherein said digital multiplexers include a third plurality of respective selectable inputs from at least one non-adjacent columns of data within the storage buffer.

10. A system for processing stereo images including a first image from a first camera and a second image from a second camera, the system comprising:
(a) a storage buffer operatively attached to a processor, wherein the processor compares a first image and a second image, the storage buffer storing image data of the second image, the storage buffer including a data-shifting-hardware mechanism which while the processor compares a patch of the first image to a swath of the second image, the data shifting mechanism using hardware within the storage buffer shifts at least a portion of the swath within the storage buffer; and
(b) a second storage buffer operatively attached to said processor wherein upon completing the comparison between the patch of the first image and the swath of the second image, shifts a remaining portion of a second swath into the storage buffer using a second data-shifting-hardware mechanism attached between the storage buffer and the second storage buffer.

11. The system, according to claim 10, wherein the second storage buffer includes no more than two columns of data

12. The system, according to claim 10, further comprising:
(c) a pixel alignment unit operatively attached to the storage buffer which inputs two consecutive words from a memory unit and aligns said two consecutive words to a single word.

13. The system, according to claim 12, wherein said pixel alignment unit is operatively attached to said second storage buffer.
